# EUROPÄISCHE PATENTSCHRIFT

(11) **EP 3 510 748 B1**
(45) Veröffentlichungstag und Bekanntmachung des Hinweises auf die Patenterteilung: **29.03.2023**
(21) Anmeldenummer: 17748755.0
(22) Anmeldetag: 03.08.2017
(51) Int. Cl.: H04L 67/12, H04L 67/125

(54) **VERFAHREN, VORRICHTUNG UND COMPUTERPROGRAMM ZUM EMPFANGEN, VERARBEITEN UND ÜBERTRAGEN VON DATEN**
METHOD, DEVICE AND COMPUTER PROGRAM FOR RECEIVING, PROCESSING AND TRANSMITTING DATA
PROCÉDÉ, DISPOSITIF ET PROGRAMME INFORMATIQUE POUR LA RÉCEPTION, LE TRAITEMENT ET LA TRANSMISSION DE DONNÉES

(30) Priorität: 08.09.2016 DE 102016217081
(43) Veröffentlichungstag der Anmeldung: 17.07.2019
(73) Patentinhaber: Robert Bosch GmbH, 70442 Stuttgart (DE)
(72) Erfinder: ROHDE, Jan, 70192 Stuttgart (DE); MIELENZ, Holger, 73760 Ostfildern (DE)
(86) Internationale Anmeldenummer: PCT/EP2017/069731
(87) Internationale Veröffentlichungsnummer: WO 2018/046203

(56) Entgegenhaltungen:
- DE-A1-102011 083 039
- DE-U1-202015 001 428
- US-A1- 2012 221 172

## Beschreibung

Die vorliegende Erfindung betrifft ein Verfahren sowie eine Vorrichtung zum Empfangen, Verarbeiten und Übertragen von Daten. Das Verfahren umfasst einen Schritt des Empfangens von ersten Datenwerten, einen Schritt des Empfangens von zweiten Datenwerten, einen Schritt des Bewertens der Güte von Umfeldsensorik und einen Schritt des Übertragens eines Signals zur Beeinflussung der Umfeldsensorik, abhängig von der Bewertung der Güte.

### Stand der Technik

Die DE 10 2011 083039 A1 offenbart eine Vorrichtung zum Betreiben eines Fahrzeugs, mit einem Fahrerassistenzsystem zum Bereitstellen einer Fahrerassistenzfunktion und einer Steuerung (105) zum Steuern des Fahrerassistenzsystems, abhängig von Fahrzeugumfelddaten und einem den Fahrzeugumfelddaten zugeordneten Gütefaktor. Die DE 10 2015 001428 U1 offenbart ein Anti-Einbruch-Schließsystem für Fahrzeuge.

### Offenbarung der Erfindung

Das erfindungsgemäße Verfahren zum Empfangen, Verarbeiten und Übertragen von Daten umfasst die Schritte des Anspruchs 1.

Der Vorteil des hier offenbarten Verfahrens liegt darin, dass eine Erfassung der Umgebung eines Fahrzeugs erfolgt, ohne dass diese durch die Umfeldsensorik anderer Fahrzeugsysteme gestört wird. Weiterhin trägt dieses Verfahren zur Robustheit und Funktionsfähigkeit solcher Fahrzeugsysteme dabei. Daraus resultiert eine vorteilhafte Beeinflussung der Verkehrssicherheit, sowohl für das Fahrzeug dessen Umfeldsensorik entsprechend dem hier vorgestellten Verfahren verändert wird, als auch bei allen anderen Fahrzeuge die an dem Verfahren beteiligt sind.

Eine mögliche Störung einer Umfeldsensorik durch eine andere Umfeldsensorik kann beispielsweise erfolgen, indem sich jeweils Radarsensoren zur Detektion des Umfelds verwendet werden und sich die Radarwellen gegenseitig derart überlagern, dass es zu einer destruktivem Interferenz der Radarwellen kommt und somit sowohl die eine als auch die andere Umfeldsensorik ein schlechteres Signal empfängt.

Vorzugsweise erfolgen das Empfangen der ersten und/oder zweiten Datenwerte und/oder das Übertragen des Signals zur Beeinflussung mittels einer Funkverbindung, beispielsweise unter Verwendung wenigstens einer ersten mobilen Sende- und Empfangsvorrichtung, insbesondere eines Smartphones.

Die Verwendung einer Funkverbindung erlaubt eine weitreichende Verbindung, welche zudem - beispielsweise mittels eines Smartphones - ohne zusätzliche Kommunikationseinrichtung in einem Fahrzeug möglich ist.

Die ersten Datenwerte umfassen erste Trajektoriendatenwerte, welche eine erste Trajektorie des ersten Fahrzeugs repräsentieren, und die zweiten Datenwerte umfassen zweite Trajektoriendatenwerte, welche eine zweite Trajektorie des zweiten Fahrzeugs repräsentieren.

Dies hat zum Vorteil, dass genau bestimmt werden kann, in welchem Bereich das Verfahren ausgeführt werden muss, da aufgrund der ersten und/oder zweiten Trajektoriendatenwerte Bereiche bestimmt werden können, in denen eine zuverlässige Erfassung der Umgebung für alle Beteiligten Fahrzeuge von bedeutender Relevanz für deren Sicherheit ist.

Vorzugsweise erfolgt die Bewertung der Güte der ersten und der zweiten Umfeldsensorik, indem ausgehend von den ersten und zweiten Umgebungsdatenwerten weitere Umgebungsdatenwerte berechnet werden und die weiteren Umgebungsdatenwerte nach vorgegebenen Kriterien mit vorgegebenen Parametern verglichen werden.

Die Bestimmung der Güte der ersten und der zweiten Umfeldsensorik ist besonders vorteilhaft, da diese Einschätzung der Umfeldsensorik und das anschließend davon abhängige ausgeführte Verfahren es erlaubt, eine bestmögliche Umgangserfassung der Umgebung aller beteiligten Fahrzeuge zu ermöglichen.

Hierin zeigt sich der Vorteil, dass der störende Einfluss beispielsweise einer einzelnen Umfeldsensorik reduziert und/oder komplett unterdrückt wird, was insgesamt eine bestmögliche Erfassung der Umgebung erlaubt.

Das Übertragen des Signals erfolgt derart, dass die erste Umfeldsensorik derart abgeschaltetwird, dass mittels der zweiten Umfeldsensorik erfasste dritte Datenwerten empfangen werden.

Dies erlaubt in vorteilhafter Weise, dass die dritten Datenwerte eine bessere und/oder vollständigere und/oder weitreichendere und/oder schnellere Umgebungserfassung umfassen.

Die mittels der zweiten Umfeldsensorik erfassten dritte Datenwerte umfassen dritte Umgebungsdatenwerte, wobei die dritten Umgebungsdatenwerte eine Umgebung des ersten und des zweiten Fahrzeugs repräsentieren.

Die dritten Umgebungsdatenwerte werden an das erste Fahrzeug und/oder das zweite Fahrzeug und/oder wenigstens ein weiteres Fahrzeug übertragen.

Hierin zeigt sich der Vorteil, dass die Umgebungsdatenwerte, welche in besonders vorteilhafter Weise die Umgebung aller beteiligten Fahrzeuge repräsentieren, eben diesen beteiligten Fahrzeugen zur Verfügung gestellt wird, wodurch die Sicherheit dieser Fahrzeuge erhöht wird.

Die erfindungsgemäße Vorrichtung zum Empfangen, Verarbeiten und Übertragen von Daten umfasst die Merkmale des Anspruchs 4.

Weiterhin wird ein Computerprogramm gemäß Anspruch 5 offenbart.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:

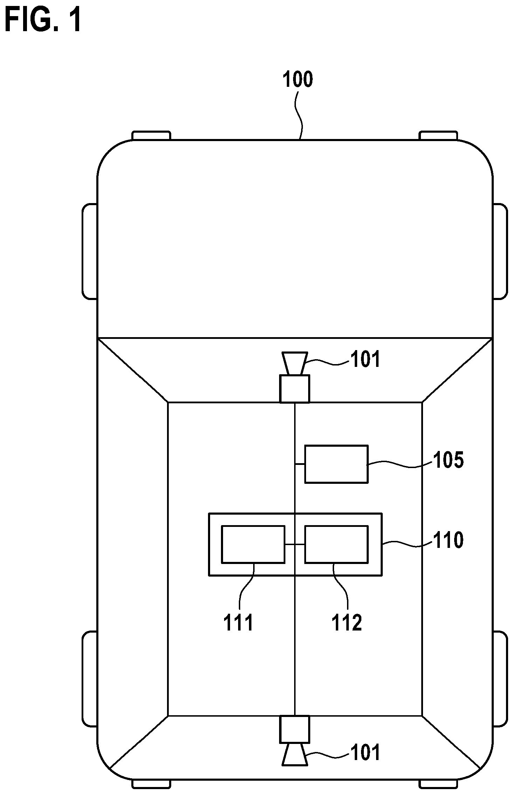

Figur 1 rein beispielhaft das erste Fahrzeug 100, welches an dem erfindungsgemäßen Verfahren beteiligt ist. Dabei kann die Beschreibung sowohl des ersten Fahrzeugs 100 als auch die der Vorrichtung 110, welche das erste Fahrzeug 100 mit sich führt, stellvertretend für das zweite und/oder das dritte Fahrzeug 200, 300 gelten. Dies gilt auch für die Beschreibung bzw. Anordnung der ersten Umfeldsensorik 101, welche entsprechend als zweite Umfeldsensorik 201 von dem zweiten Fahrzeug 200 umfasst wird sowie für die ersten Sende- und Empfangsmittel 105 des ersten Fahrzeugs 100 bzw. die zweiten Sende- und Empfangsmittel 205 des zweiten Fahrzeugs 200. Grundsätzlich kann es sich bei den ersten und/oder zweiten Sende- und Empfangsmittel 105, 205 sowohl um mobile als auch um nicht-mobile - also fest im ersten Fahrzeug angebrachte - Sende- und Empfangsmittel 105, 205 handeln. Dementsprechend wird nur noch der Begriff Sende- und Empfangsmittel benutzt, obwohl darunter sowohl mobile als auch nicht-mobile Mittel verstanden werden können.

Figur 2 rein beispielhaft einen externen Server 400.
Figur 3 rein beispielhaft ein Anwendungsbeispiel.
Figur 4 rein beispielhaft ein Ausführungsbeispiel in Form eines Ablaufdiagramms des erfindungsgemäßen Verfahrens unter Verwendung der erfindungsgemäßen Vorrichtungen.

### Ausführungsformen der Erfindung

Figur 1 zeigt das erste Fahrzeug 100, welches die Vorrichtung 110 umfasst. Weiterhin umfasst das Fahrzeug 100 eine erste Umfeldsensorik 101, welche hier beispielhaft als Videosensor mit einer Erfassung nach vorne bzw. hinten gezeigt ist. Dabei kann es sich beispielsweise auch um einen Radarsensor und/oder Lidarsensor und/oder Ultraschallsensor handeln. Generell kann es sich bei der ersten Umfeldsensorik 101 um jede Anzahl an Sensoren und jeden Sensortyp handeln, welche dazu geeignet sind die Umgebung 150 des ersten Fahrzeugs 100 zu erfassen.

Weiterhin umfasst das erste Fahrzeug 100 die Vorrichtung 110, welche dritte Empfangsmittel 111 zum Empfangen eines Steuersignals umfasst und Steuermittel 112 zum Steuern der ersten Umfeldsensorik 101, abhängig von dem durch die dritten Empfangsmittel 111 empfangenen Steuersignal.

Die dritten Empfangsmittel 111 sind dabei derart ausgebildet, dass diese ein Steuersignal direkt von einem externen Server 400 und/oder mittels der ersten Sende- und Empfangsmittel 105 empfangen kann. Weiterhin sind die dritten Empfangsmittel 111 derart ausgebildet, das empfangene Steuersignal an weitere Mittel in dem ersten Fahrzeug 100 - wie beispielsweise den Steuermitteln 112 - weiterzuleiten.

Die Steuermittel 112 sind derart ausgebildet, dass diese ein von den dritten Empfangsmitteln 111 weitergeleitetes Steuersignal umsetzen, um der ersten Umfeldsensorik 101 des ersten Fahrzeugs 100 anzusteuern und zu beeinflussen. Dabei hängt die Art und Weise der Beeinflussung zum einen von dem Steuersignal und zum anderen vom Sensor selbst, wie beispielsweise von der Bauart und/oder der Leistungsfähigkeit und/oder dem Sensortyp und/oder der Anordnung am Fahrzeug und/oder der Größe und/oder dem Zustand und/oder weiteren sensorbedingten Merkmalen, ab.

Weiterhin können die Steuermittel 112 derart ausgebildet sein, dass diese alle notwendigen weiteren Mittel umfassen um nicht nur ein Ansteuern der ersten Umfeldsensorik 101 zu ermöglichen, sondern auch um ein Erfassen der Umgebung 150 des ersten Fahrzeugs 100 mittels der ersten Umfeldsensorik 101 durchzuführen. Dabei kann es sich beispielsweise um einen Prozessor und/oder eine Festplatte und/oder Arbeitsspeicher und/oder eine Grafikkarte handeln welche insgesamt - ausgestattet mit der notwendigen Software - in der Lage sind ein Erfassen der Umgebung 150 des ersten Fahrzeugs 100 mittels der ersten Umfeldsensorik 101 durchzuführen.

Weiterhin umfasst das erste Fahrzeug 100 erste Sende- und Empfangsmittel 105. Darunter kann beispielsweise ein Smartphone und/oder eine zusätzliche Vorrichtung im ersten Fahrzeug 100 verstanden werden, welche dazu ausgebildet ist Signale mit diesem Smartphone auszutauschen. Insgesamt sind die ersten Sende- und Empfangsmittel 105 derart zu verstehen, dass diese alles umfassen bzw. derart ausgebildet sind, um ein Senden und Empfangen von Daten zwischen dem ersten Fahrzeug 100 und einer externen Sende- und Empfangsvorrichtung außerhalb des ersten Fahrzeugs 100-gegebenenfalls unter Verwendung zusätzlicher Mittel (wie bspw. ein Smartphone) - zu ermöglichen.

Weiterhin sind die ersten Sende- und Empfangsmittel 105 derart ausgebildet, dass diese beispielsweise erste Umgebungsdaten, welche mittels der ersten Umfeldsensorik 101 erfasst werden, an einen externen Server 400 übertragen können.

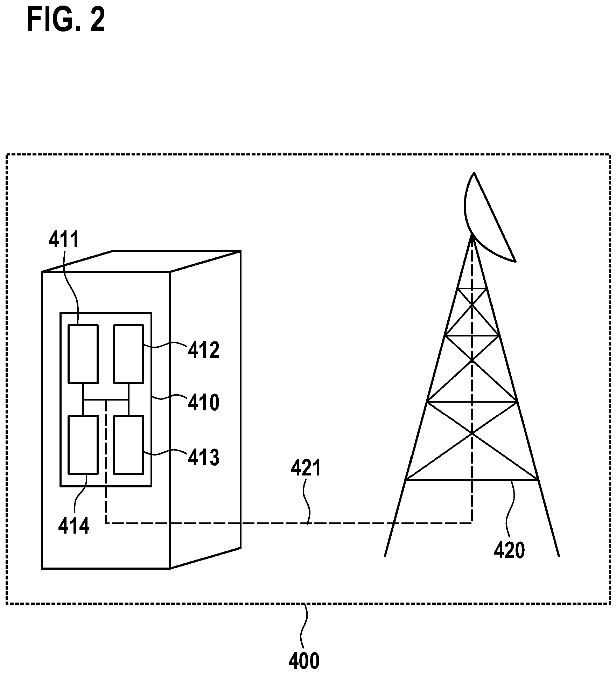

Figur 2 zeigt einen externen Server 400, welcher die erfindungsgemäße Vorrichtung 410 umfasst. Diese Vorrichtung 410 umfasst erste Empfangsmittel 411, zweite Empfangsmittel 412, Bewertungsmittel 413 und Übertragungsmittel 414. Dabei können die ersten Empfangsmittel 411 und die zweiten Empfangsmittel 412 entweder als lokal voneinander getrennte Vorrichtungsmittel oder auch als gemeinsame Empfangsmittel 411, 412 ausgebildet sein. Des Weiteren können die ersten Empfangsmittel 411 und/oder die zweiten Empfangsmittel 412 auch zusammen mit den Übertragungsmittel 414 als gemeinsame Sende- und Empfangsvorrichtung ausgebildet sein. Sowohl die ersten Empfangsmittel 411 als auch die zweiten Empfangsmittel 412 als auch die Übertragungsmittel 414 können dabei derart ausgebildet sein, dass diese - einzelnen oder wie oben beschrieben gemeinsam ausgebildet - direkt senden und/oder empfangen können oder auch mit einer weiteren Sende- und Empfangsstation 420, welche beispielsweise dazu ausgebildet ist über große Strecken zusenden bzw. zu empfangen, mittels Verbindungsmittel 421 verbunden sind.

Die Vorrichtung 410 umfasst weiterhin Bewertungsmittel 413, welche dazu ausgebildet sind jeweils die Güte der ersten Umfeldsensorik 101 des ersten Fahrzeugs 100 und die Güte der zweiten Umfeldsensorik 201 des zweiten Fahrzeugs 200 zu bewerten. Dabei umfassen die Bewertungsmittel 413 beispielsweise einen Prozessor und oder eine Festplatte und oder einen Arbeitsspeicher, welche dazu ausgebildet mittels wenigstens einem Computerprogramm die Bewertung der Güte der ersten Umfeldsensorik 101 des ersten Fahrzeugs 100 und die Bewertung der Güte der zweiten Umfeldsensorik 201 und des zweiten Fahrzeugs 200 durchzuführen. Dabei wird diese Bewertung beispielsweise der Art durchgeführt, dass die ersten Umgebungsdatenwerte mit den zweiten Umgebungsdatenwerten zusammengeführt werden und daraus neue dritte Umgebungsdatenwerte gebildet werden, welche eine gemeinsame Umgebung des ersten Fahrzeugs 100 und des zweiten Fahrzeugs 200 repräsentieren.

Dies kann beispielsweise erfolgen, indem diese dritten Umgebungsdatenwerte mit bereits hinterlegten Datenmustern verglichen werden. Aus diesem Vergleich wir dann anschließend mittels vorgegebener Vergleichskriterien eine Bewertung der Güte der ersten Umfeldsensorik 101 des ersten Fahrzeugs 100 und der Güte der zweiten Umfeldsensorik 201 des zweiten Fahrzeugs 200 durchgeführt.

In einer weiteren Ausführungsform wird die Güte der ersten Umfeldsensorik 101 des ersten Fahrzeugs 100 und die Güte der zweiten Umfeldsensorik 201 des zweiten Fahrzeugs 200 bestimmt, indem die erste Information der ersten Umfeldsensorik 101 mit der zweiten Umfeldsensorik 201 verglichen wird. Hierbei kann beispielswiese aus den ersten und zweiten Information technische Merkmale ausgelesen werden, dass die erste Umfeldsensorik 101 des ersten Fahrzeugs 100 oder die zweite Umfeldsensorik 201 des zweiten Fahrzeugs 200 besser geeignet ist, Umgebungsdatenwerte zu erfassen.

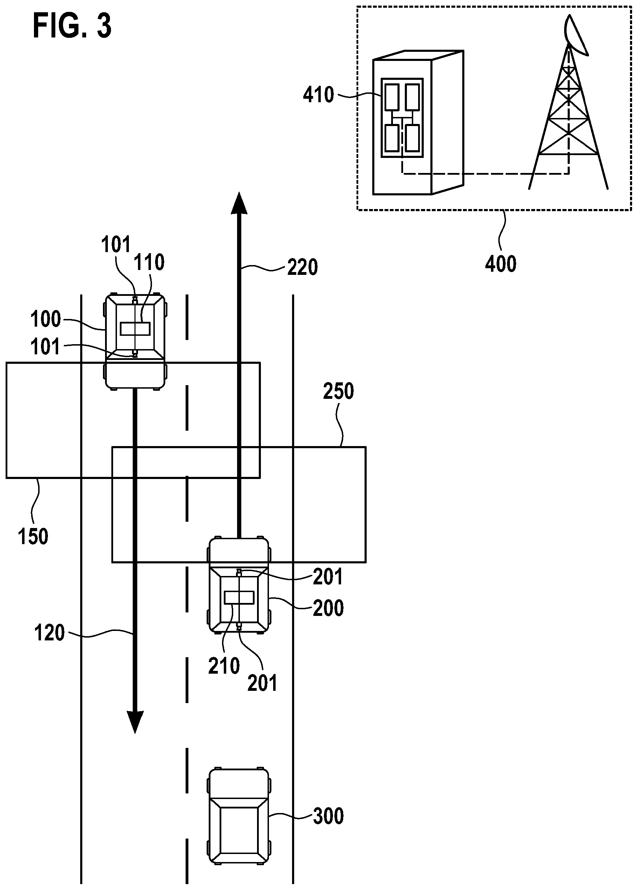

Figur 3 zeigt rein beispielhaft ein Anwendungsbeispiel für das erfindungsgemäße Verfahren, indem eine Situation gezeigt wird - stellvertretend für weitere Beispiele - in der dieses Verfahren zum Einsatz kommt. Dabei ist ein erstes Fahrzeug 100 gezeigt, welches mittels seiner Umfeldsensorik 101 eine Umgebung 150 des ersten Fahrzeugs 100 erfasst. Weiterhin ist ein zweites Fahrzeug 200 zu sehen, welches ebenfalls mittels seiner Umfeldsensorik 201 eine Umgebung 250 des zweiten Fahrzeugs 200 erfasst. In dem hier gezeigten Beispiel gibt es einen Überlapp zwischen der erfassten Umgebung 150 des ersten Fahrzeugs 100 und der umfassten Umgebung 250 des zweiten Fahrzeugs 200. Zudem ist ein drittes Fahrzeug 300 gezeigt, welches sich in räumlicher Nähe zu dem ersten Fahrzeug 100 und dem zweiten Fahrzeug 200 befindet. Ein Ausschnitt der jeweiligen Trajektorien 120, 220 des ersten Fahrzeugs 100 und des zweiten Fahrzeugs 200 sind hier beispielhaft durch Pfeile gezeigt. Weiterhin ist ein externer Server 400 gezeigt, welche die erfindungsgemäße Vorrichtung 410 umfasst.

Aufgrund des Überlappens der Umgebungen 120, 220, welche von dem ersten Fahrzeug 100 und dem zweiten Fahrzeug 200 erfasst werden, kann es für beide Fahrzeuge 100, 200 innerhalb des überlappten Bereichs zu einem verschlechterten Erfassen der Umgebung kommen, dass sich die Umfeldsensorik 101 des ersten Fahrzeugs 100 und die Umfeldsensorik 201 des zweiten Fahrzeugs 200 diesem Bereich störend beeinflussen. Da nun sowohl das erste Fahrzeug 100 als auch das zweite Fahrzeug 200 in diesem Beispiel jeweils mit einer Sende- und Empfangsvorrichtung ausgestattet sind, übertragen beide Fahrzeuge Umgebungsdatenwerte, welche zum einen die erste Umgebung 150 des ersten Fahrzeugs 100 zum anderen die zweite Umgebung 250 des zweiten Fahrzeugs 200 repräsentieren, an den externen Server 400. Die externe Server 400 kann nun mittels der Vorrichtung 410 und denen von der Vorrichtung 410 umfassten Mittel die vom ersten Fahrzeug 100 und vom zweiten Fahrzeug 200 übertragenen Umgebungsdatenwerte empfangen und mittels geeigneter Bewertungsmittel ein Bewerten der Güte der ersten Umfeldsensorik 101 und der zweiten Umfeld Sensorik 201 durchzuführen.

Nach der Bewertung der ersten und der zweiten Umfeldsensorik kann ein Signal zu Beeinflussung der ersten und/oder der zweiten Umfeldsensorik 101, 201 an das erste Fahrzeug 100 und/oder zweite Fahrzeug 200 übertragen werden. Daraufhin können verbesserte Umgebungsdatenwerte, welche sowohl eine Umgebung 150 des ersten Fahrzeugs 101 und eine Umgebung 250 des zweiten Fahrzeugs 200 repräsentieren, erfasst und erneut an den externen Server 100 übertragen werden.

Anschließend können ausgehend von dem externen Server 400 die verbesserten Umgebungsdatenwerte an das erste Fahrzeug 100 und/oder an das zweite Fahrzeug 200 und/oder an das wenigstens eine weitere dritte Fahrzeug 300 übertragen werden.

Die hier gezeigte Situation, in der sich ein erstes Fahrzeug 100 einem zweiten Fahrzeug 200 entgegenkommend nähert, wobei sich hinter dem zweiten Fahrzeug 201 drittes Fahrzeug 300 befindet, ist rein beispielhaft ausgewählt. Ein weiteres Beispiel, bei dem das hier offenbarte Verfahren vorteilhaft zum Einsatz kommt, ist innerhalb eines Ortes an einer Kreuzung. Hier kann das störende Überlappen einer ersten Umfeldsensorik 101 eines ersten Fahrzeugs 100 und einer zweiten Umfeldsensorik 201 eines zweiten Fahrzeugs 200 besonders dramatisch sein, wenn sich beispielsweise in diesem überlappten Bereich ein Objekt - wie beispielsweise ein Fußgänger oder ein Radfahrerbefindet, welche aufgrund des Überlappens nicht erkannt wird. Der externe Server 400 kann hier beispielsweise Bestandteil der Verkehrsinfrastruktur - wie eine Ampel oder einer Straßenlaterne - sein.

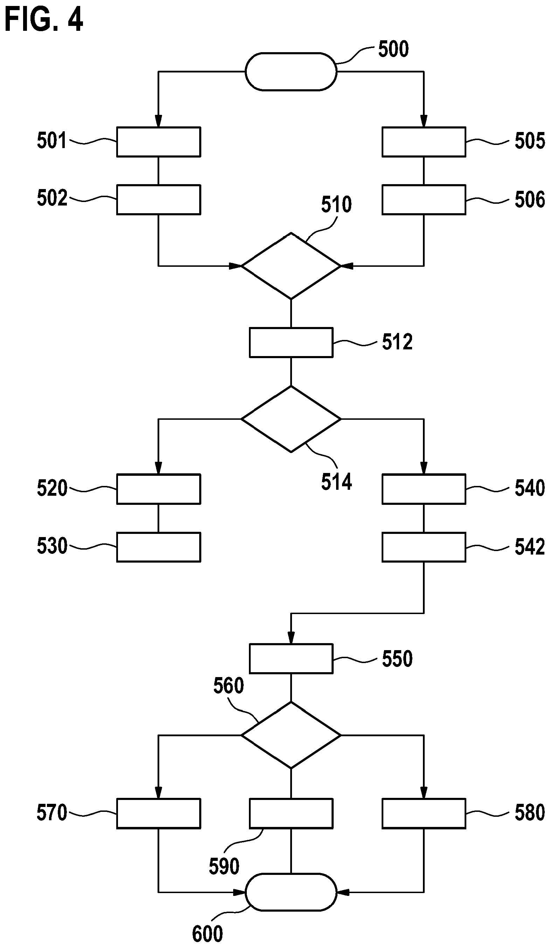

Figur 4 zeigt rein beispielhaft ein Ausführungsbeispiel anhand eines Ablaufdiagramms.

In Schritt 500 beginnt das Verfahren.

In Schritt 501 erfasst ein erstes Fahrzeug 100 mittels seiner Umfeldsensorik 101 erste Umgebungsdatenwerte.

In Schritt 502 werden diese an einen externen Server 400 übertragen.

In Schritt 505 erfasst ein zweites Fahrzeug 200 mittels seiner Umfeldsensorik 201 zweite Umgebungsdatenwerte.

In Schritt 506 werden diese an den externen Server 400 übertragen.

In Schritt 510 empfängt der externe Server 400 mittels der von ihm umfassten Vorrichtung 410 sowohl die ersten Umgebungsdatenwerte des ersten Fahrzeugs 100 als auch die zweiten Umgebungsdatenwerte des zweiten Fahrzeugs 200.

In Schritt 512 erfolgt mittels der von der Vorrichtung 410 umfassten Bewertungsmittel 413 ein Bewerten der Güte der ersten Umfeldsensorik 101 des ersten Fahrzeugs 100 und der zweiten Umfeldsensorik 201 des zweiten Fahrzeugs 200.

In Schritt 514 überträgt der externe Server 401 ein Signal zum Abschalten der ersten Umfeldsensorik 101 des ersten Fahrzeugs 100.

In Schritt 520 empfängt das erste Fahrzeug 100 das Signal zum Abschalten der ersten Umfeldsensorik 101.

In Schritt 530 wird die erste Umfeldsensorik 101 des ersten Fahrzeugs 100 abgeschaltet.

In Schritt 540 erfasst das zweite Fahrzeug 200 mittels der zweiten Umfeldsensorik 201 erneut Umgebungsdatenwerte, wobei diesmal eine verbesserte Erfassung erfolgt, da sich die erste Umfeldsensorik 101 nicht mehr störend auf die Erfassung der zweiten Umfeldsensorik 201 auswirkt.

In Schritt 542 überträgt das zweite Fahrzeug 200 die erneut erfassten Umgebungsdatenwerte an den externen Server 400.

In Schritt 550 empfängt der externe Server 400 die erneut erfassten Umgebungsdatenwerte.

In Schritt 560 überträgt der externe Server 400 die erneut erfassten Umgebungsdatenwerte an das erste Fahrzeug 100, an das zweite Fahrzeug 200 und das wenigstens eine weitere dritte Fahrzeug 300.

In Schritt 570 empfängt das erste Fahrzeug 100 die erneut erfassten Umgebungsdatenwerte.

In Schritt 580 empfängt das zweite Fahrzeug 200 die erneut erfassten Umgebungsdatenwerte.

In Schritt 590 empfängt das wenigstens eine weitere dritte Fahrzeug 300 die erneut erfassten Umgebungsdatenwerte.

In Schritt 600 endet das Verfahren.

## Patentansprüche

1. Verfahren zum Empfangen, Verarbeiten und Übertragen von Daten mit folgenden Schritten:
- Empfangen von ersten Datenwerten, welche erste Umgebungsdatenwerte und erste Informationen über eine erste Umfeldsensorik (101) eines ersten Fahrzeugs (100) umfassen, wobei die ersten Umgebungsdatenwerte eine Umgebung (150) des ersten Fahrzeugs (100) repräsentieren und mittels der ersten Umfeldsensorik (101) erfasst werden, die ersten Datenwerte erste Trajektoriendatenwerte umfassen, welche eine erste Trajektorie (120) des ersten Fahrzeugs (100) repräsentieren;
- Empfangen von zweiten Datenwerten, welche zweite Umgebungsdatenwerte und zweite Informationen über eine zweite Umfeldsensorik (201) eines zweiten Fahrzeugs (200) umfassen, wobei die zweiten Umgebungsdatenwerte eine Umgebung (250) des zweiten Fahrzeugs (200) repräsentieren und mittels der zweiten Umfeldsensorik (201) erfasst werden, wobei es einen überlappten Bereich zwischen der erfassten Umgebung 150 des ersten Fahrzeugs 100 und der umfassten Umgebung 250 des zweiten Fahrzeugs 200 gibt, wobei sich die Umfeldsensorik 101 des ersten Fahrzeugs 100 und die Umfeldsensorik 201 des zweiten Fahrzeugs 200 diesem Bereich störend beeinflussen, die zweiten Datenwerte zweite Trajektoriendatenwerte umfassen, welche eine zweite Trajektorie (220) des zweiten Fahrzeugs (200) repräsentieren;
- Bewerten der Güte der ersten und der zweiten Umfeldsensorik (101, 201), abhängig von den ersten und zweiten Datenwerten;
- Übertragen eines Signals zum Abschalten der ersten Umfeldsensorik (101) des ersten Fahrzeugs (100), abhängig von der Bewertung der Güte der ersten und der zweiten Umfeldsensorik (101, 201), wobei nach dem Abschalten der ersten Umfeldsensorik mittels der zweiten Umfeldsensorik erfasste dritte Datenwerten empfangen werden, wobei die dritten Datenwerte dritte Umgebungsdatenwerte umfassen, wobei die dritten Umgebungsdatenwerte eine Umgebung des ersten und des zweiten Fahrzeugs repräsentieren, wobei die dritten Umgebungsdatenwerte an das erste Fahrzeug und/oder das zweite Fahrzeug und/oder wenigstens ein weiteres Fahrzeug übertragen werden.

2. Verfahren nach Anspruch 1, **dadurch gekennzeichnet, dass** das Empfangen der ersten und/oder zweiten Datenwerte und/oder das Übertragen des Signals zur Beeinflussung mittels einer Funkverbindung, beispielsweise unter Verwendung wenigstens einer ersten mobilen Sende- und Empfangsvorrichtung (105, 205), insbesondere eines Smartphones, erfolgen.

3. Verfahren nach Anspruch 1, **dadurch gekennzeichnet, dass** die Bewertung der Güte der ersten und der zweiten Umfeldsensorik (101, 201) erfolgt, indem ausgehend von den ersten und zweiten Umgebungsdatenwerten weitere Umgebungsdatenwerte berechnet werden und die weiteren Umgebungsdatenwerte nach vorgegebenen Kriterien mit vorgegebenen Parametern verglichen werden.

4. Vorrichtung (410) , welche dazu ausgebildet ist, alle Schritte des Verfahrens gemäß einem der Ansprüche 1 bis 3 auszuführen.

5. Computerprogramm, welches, wenn es durch eine Recheneinheit ausgeführt wird, das Verfahren gemäß einem der Ansprüche 1-3 durchführt.

## Claims

1. Method for receiving, processing and transmitting data, having the following steps:
- receiving first data values comprising first surroundings data values and first information via a first environment sensor system (101) of a first vehicle (100), the first surroundings data values representing surroundings (150) of the first vehicle (100) and being recorded by means of the first environment sensor system (101), the first data values comprising first trajectory data values representing a first trajectory (120) of the first vehicle (100);
- receiving second data values comprising second surroundings data values and second information via a second environment sensor system (201) of a second vehicle (200), the second surroundings data values representing surroundings (250) of the second vehicle (200) and being recorded by means of the second environment sensor system (201), there being an overlapped region between the recorded surroundings (150) of the first vehicle (100) and the included surroundings (250) of the second vehicle (200), the environment sensor system (101) of the first vehicle (100) and the environment sensor system (201) of the second vehicle (200) having an interfering influence on one another in this region, the second data values comprising second trajectory data values representing a second trajectory (220) of the second vehicle (200);
- rating the quality of the first and second environment sensor systems (101, 201), on the basis of the first and second data values;
- transmitting a signal for shutting down the first environment sensor system (101) of the first vehicle (100), on the basis of the rating of the quality of the first and second environment sensor systems (101, 201), shutdown of the first environment sensor system being followed by third data values recorded by means of the second environment sensor system being received, the third data values comprising third surroundings data values, the third surroundings data values representing surroundings of the first and second vehicles, wherein the third surroundings data values are transmitted to the first vehicle and/or the second vehicle and/or at least one further vehicle.

2. Method according to Claim 1, **characterized in that** the first and/or second data values are received, and/or the signal for influencing is transmitted, by means of a radio connection, for example using at least one first mobile transmission and reception device (105, 205), in particular a smartphone.

3. Method according to Claim 1, **characterized in that** the quality of the first and second environment sensor systems (101, 201) is rated by calculating further surroundings data values from the first and second surroundings data values and comparing the further surroundings data values with predefined parameters according to predefined criteria.

4. Device (410) designed to carry out all the steps of the method according to one of Claims 1 to 3.

5. Computer program that, when executed by a computing unit, performs the method according to one of Claims 1-3.

## Revendications

1. Procédé de réception, traitement et transmission de données, comprenant les étapes suivantes :
- réception de premières valeurs de données, lesquelles comprennent des premières valeurs de données d'environnement et des premières informations à propos d'un premier système de détection d'environnement (101) d'un premier véhicule (100), les premières valeurs de données d'environnement représentant un environnement (150) du premier véhicule (100) et étant acquises au moyen d'un premier système de détection d'environnement (101), les premières valeurs de données comprenant des valeurs de données de trajectoire qui représentent une première trajectoire (120) du premier véhicule (100) ;
- réception de deuxièmes valeurs de données, lesquelles comprennent des deuxièmes valeurs de données d'environnement et des deuxièmes informations à propos d'un deuxième système de détection d'environnement (201) d'un deuxième véhicule (200), les deuxièmes valeurs de données d'environnement représentant un environnement (250) du deuxième véhicule (200) et étant acquises au moyen du deuxième système de détection d'environnement (201), une zone de chevauchement existant entre l'environnement 150 détecté du premier véhicule 100 et l'environnement 250 acquis du deuxième véhicule 200, le système de détection d'environnement 101 du premier véhicule 100 et le système de détection d'environnement 201 du deuxième véhicule 200 influençant cette zone de manière perturbante, les deuxièmes valeurs de données comprenant des valeurs de données de trajectoire qui représentent une deuxième trajectoire (220) du deuxième véhicule (200) ;
- évaluation de la qualité du premier et du deuxième système de détection d'environnement (101, 201) en fonction des premières et deuxièmes valeurs de données ;
- transmission d'un signal en vue de désactiver le premier système de détection d'environnement (101) du premier véhicule (100) en fonction de l'évaluation de la qualité du premier et du deuxième système de détection d'environnement (101, 201), des troisièmes valeurs de données détectées au moyen du deuxième système de détection d'environnement étant reçues après la désactivation du premier système de détection d'environnement, les troisièmes valeurs de données comprenant des troisièmes valeurs de données d'environnement, les troisièmes valeurs de données d'environnement représentant un environnement du premier et du deuxième véhicule, les troisièmes valeurs de données d'environnement étant transmises au premier véhicule et/ou au deuxième véhicule et/ou au moins à un véhicule supplémentaire.

2. Procédé selon la revendication 1, **caractérisé en ce que** la réception des premières et/ou des deuxièmes valeurs de données et/ou la transmission du signal servant à l'influence s'effectue(nt) au moyen d'une liaison radioélectrique, par exemple en utilisant au moins un premier dispositif d'émission et de réception mobile (105, 205), notamment un smartphone.

3. Procédé selon la revendication 1, **caractérisé en ce que** l'évaluation de la qualité du premier et du deuxième système de détection d'environnement (101, 201) s'effectue en calculant, à partir des premières et des deuxièmes valeurs de données d'environnement, des valeurs de données d'environnement supplémentaires et en comparant les valeurs de données d'environnement supplémentaires avec des paramètres prédéfinis selon des critères prédéfinis.

4. Dispositif (410), qui est configuré pour exécuter toutes les étapes du procédé selon l'une des revendications 1 à 3.

5. Programme informatique qui, lorsqu'il est exécuté par une unité de calcul, met en oeuvre le procédé selon l'une des revendications 1 à 3.
